# EUROPÄISCHE PATENTANMELDUNG

(11) **EP 0 829 664 A1**
(43) Veröffentlichungstag der Anmeldung: **18.03.1998**
(21) Anmeldenummer: 97111595.1
(22) Anmeldetag: 09.07.1997
(51) Int. Cl.: F16J 15/34, F16J 15/36

(54) **Gleitringdichtung**

(30) Priorität: 17.09.1996 DE 19637814
(71) Anmelder: Firma Carl Freudenberg, 69469 Weinheim (DE)
(72) Erfinder: Hintenlang, Armin, 68493 Hirschberg 1 (DE); Schäfer, Klaus, 68219 Mannheim (DE); Kraus, Reinhold, 69509 Mörlenbach (DE); Ewald, Kurt, 67227 Frankenthal (DE); Jaekel, Andreas, 69469 Weinheim (DE); Weis, Rolf, 69502 Hemsbach (DE); Schäfer, Erwin, 68519 Viernheim (DE); Stichler, Bernd, 71642 Ludwigsburg (DE)

(57) **Zusammenfassung**

Gleitringdichtung, umfassend einen Gleitring (1) und einen Gegenring (2), die einander unter axialer Vorspannung mit Dichtflächen (3, 4) relativ verdrehbar und dichtend berühren, wobei der Gegenring (2) und ein als Widerlager ausgebildeter, im wesentlichen L-förmiger Mitnehmerring (5) relativ unverdrehbar miteinander verbunden sind und der Mitnehmerring (5) auf einer abzudichtenden Welle (6) relativ unverdrehbar festlegbar ist, wobei der Gegenring (2) und der Mitnehmerring (5) durch einen Dichtring (7) gegeneinander abgedichtet sind wobei der Gegenring (2) den Radialsteg (8) des Mitnehmerrings (5) unmittelbar anliegend berührt und den Axialsteg (9) mit radialem Abstand umschließt und wobei in dem durch den Abstand gebildeten Spalt (10) der Dichtring (7) unter elastischer Vorspannung dichtend angeordnet ist. Der Gegenring (2) weist eine Innenumfangsfläche (11) auf, die mit der Rotationsachse (12) einen Winkel α einschließt, der 0,5 bis 60° beträgt, wobei der radiale Abstand auf der dem Radialsteg (8) zugewandten Seite größer ist als auf der dem Gleitring (1) zugewandten Seite.

## Beschreibung

### Technisches Gebiet

Die Erfindung betrifft eine Gleitringdichtung, umfassend einen Gleitring und einen Gegenring, die einander unter axialer Vorspannung mit Dichtflächen relativ verdrehbar und dichtend berühren, wobei der Gegenring und ein als Widerlager ausgebildeter, im wesentlichen L-förmiger Mitnehmerring relativ unverdrehbar miteinander verbunden sind und der Mitnehmerring auf einer abzudichtenden Welle relativ unverdrehbar festlegbar ist, wobei der Gegenring und der Mitnehmerring durch einen Dichtring gegeneinander abgedichtet sind, wobei der Gegenring den Radialsteg des Mitnehmerrings unmittelbar anliegend berührt und den Axialsteg mit radialem Abstand umschließt und wobei in dem durch den Abstand gebildeten Spalt der Dichtring unter elastischer Vorspannung dichtend angeordnet ist.

### Stand der Technik

Eine solche Gleitringdichtung ist aus der DE 39 27 589 C2 bekannt. Der Mitnehmerring weist einen C-förmigen, axial in Richtung des Gleitrings offenen Querschnitt auf und ist einstückig ineinander übergehend mit dem Dichtring ausgebildet. Der Dichtring und der Mitnehmerring sind miteinander vulkanisiert, wobei der Dichtring ein an die Form des Mitnehmerrings angepaßtes Profil aufweist und die dem Gegenring zugewandte Oberfläche des Mitnehmerrings vollständig überdeckt. Der Dichtring dichtet den Mitnehmerring und den Gegenring gegeneinander ab.

### Darstellung der Erfindung

Der Erfindung liegt die Aufgabe zugrunde, eine Gleitringdichtung der vorbekannten Art derart weiterzuentwickeln, daß diese in fertigungstechnischer und wirtschaftlicher Hinsicht einfacher und kostengünstiger herstellbar ist und kompakte Abmessungen in axialer Richtung aufweist.

Diese Aufgabe wird erfindungsgemäß durch die Merkmale von Anspruch 1 gelöst. Auf vorteilhafte Ausgestaltungen nehmen die Unteransprüche Bezug.

Im Rahmen der vorliegenden Erfindung ist es vorgesehen, daß der Gegenring eine Innenumfangsfläche aufweist, mit der Rotationsachse einen Winkel α einschließt der 0,5 bis 60° beträgt und daß der radiale Abstand auf der dem Radialsteg zugewandten Seite größer ist als auf der dem Gleitring zugewandten Seite. Bevorzugt beträgt der Winkel α 5 bis 45°. Eine derart ausgebildete Gleitringdichtung ist durch ihren einfachen Aufbau problemlos und kostengünstig herstellbar. Der Mitnehmerring besteht bevorzugt aus einem nicht rostenden metallischen Werkstoff und ist spanlos umgeformt. Der Dichtring ist - bezogen auf den Mitnehmerring und den Gegenring - separat erzeugt und besteht beispielsweise bevorzugt aus einem handelsüblichen O-Ring. Derartige O-Ringe sind in einer Vielzahl von Abmessungen kostengünstig verfügbar.

Die dem Gleitring abgewandten Stirnseiten von Gegenring und Dichtring sind in einer Radialebene angeordnet, die durch die dem Gleitring zugewandte Innenfläche des Radialstegs gebildet ist. Die Abmessungen der Gleitringdichtung in axialer Richtung sind durch eine derartige Ausgestaltung wesentlich reduziert. Zur Abdichtung von Wellen, die einen Durchmesser von etwa 10 mm aufweisen, entspricht die axiale Ausdehnung der Gleitringdichtung im nicht-montierten Zustand dem Durchmesser der abzudichtenden Welle.

Der axial in Richtung des Gleitrings zunehmende Querschnitt des Gegenrings ist hinsichtlich einer einfachen Montage des Gegenrings am Mitnehmerring unter Zwischenfügung des Dichtrings von hervorzuhebendem Vorteil. Die Gefahr einer Beschädigung des Dichtrings bei der Montage ist durch die konische Innenumfangsfläche des Gegenrings weitgehend ausgeschlossen. Außerdem ist bei einer derartigen Ausgestaltung von Vorteil, daß die Flächenpressung des Dichtrings auf der dem abzudichtenden Medium zugewandten Seite größer als auf der dem abzudichtenden Medium abgewandten Seite des Dichtrings ist. Bevorzugt beträgt der Winkel α 15 bis 30°. In diesem Bereich ist ein guter Kompromiß zwischen einfacher Montierbarkeit des Gegenrings auf dem Dichtring einerseits und einer ausreichenden radialen Verpressung des Dichtrings zum Abdichten des abzudichtenden Mediums andererseits gegeben.

Der Gegenring ist von einem auf dem Axialsteg angeordneten Druckring berührt, wobei der Druckring axial in Richtung des Radialstegs vorgespannt ist. Hierbei ist von Vorteil, daß der Gegenring, der Mitnehmerring, der Dichtring und der Druckring eine vormontierbare Einheit bilden. Die Montage der gesamten Gleitringdichtung ist durch die vormontierbare Einheit wesentlich vereinfacht und mögliche Montagefehler sind auf ein Minimum begrenzt. Der Mitnehmerring und der Druckring bestehen aus einem zähharten, nicht rostenden Werkstoff, bevorzugt aus Metall.

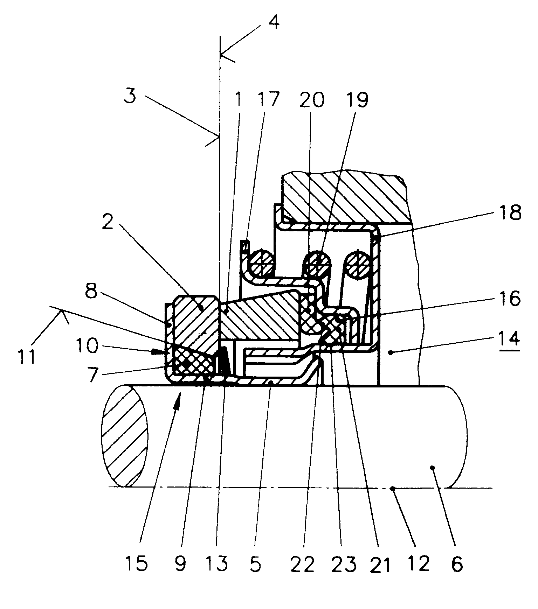

### Kurzbeschreibung der Zeichnung

Die erfindungsgemäße Gleitringdichtung wird nachfolgend anhand der Zeichnung näher erläutert:

### Ausführung der Erfindung

In der Zeichnung ist ein Ausführungsbeispiel der erfindungsgemäßen Gleitringdichtung in schematischer Darstellung gezeigt. Auf einer abzudichtenden Welle 6, die in einen abzudichtenden Raum 14 geführt ist, ist der Mitnehmerring 5 angeordnet, der aus einem rostfreien metallischen Werkstoff besteht und L-förmig ausgebildet ist. Der Mitnehmerring 5 ist auf den Außenumfang der Welle 6 aufgepreßt. Der Gegenring 2 und der Dichtring 7 sind auf der dem Radialsteg 8 des Mitnehmerrings 5 zugewandten Seite in einer Radialebene angeordnet und berühren den Radialsteg 8 anliegend. Der Druckring 13 ist auf dem Axialsteg 9 des Mitnehmerrings 5 angeordnet und hält die vormontierbare Einheit 15, bestehend aus dem Gegenring 2, dem Mitnehmerring 5, dem Dichtring 7 und dem Druckring 13 im noch nicht zur Gleitringdichtung komplettierten Zustand zusammen.

Der Dichtring 7 ist durch einen O-Ring gebildet, der durch die Montage des Gegenrings 2 elastisch verformt ist und die in der Zeichnung dargestellte Gestalt annimmt. Die Innenumfangsfläche 11 des Gegenrings 2 schließt mit der Rotationsachse 12 einen Winkel α ein, der in diesem Ausführungsbeispiel 20° beträgt, wobei der Querschnitt des Gegenrings 2 in Richtung des Gleitrings 1 zunimmt.

An der Dichtfläche 4 des Gegenrings 2 liegt die Dichtfläche 3 des Gleitrings 1 unter axialer Vorspannung relativ verdrehbar und dichtend an. Der Gleitring 1 ist auf der der Dichtfläche 3 abgewandten Seite mittels eines ringförmig ausgebildeten Rollbalgs 16 aus elastomerem Werkstoff an einem Haltering 17 dichtend abgestützt, wobei der Haltering 17 und das Gehäuse 18, das einen im wesentlichen C-förmigen, in Richtung des Gleitrings 1 offenen Querschnitt aufweist, durch eine Druckfeder 19 verbunden sind.

Der Rollbalg 16 weist einen im wesentlichen N-förmigen Querschnitt mit einem ersten 20 und einem zweiten Radialsteg 21 auf, die durch einen Axialsteg 22 verbunden sind. Der erste Radialsteg 20 berührt die der Dichtfläche 3 abgewandte Stirnseite des Gleitrings 1 und der zweite Radialsteg 21 den Innenschenkel 23 des Gehäuses 18 unter elastischer Vorspannung dichtend.

Der Haltering 17 weist ein an die Form des Rollbalgs 16 angepaßtes Profil auf, wobei der erste Radialsteg 20 unter elastischer Vorspannung axial auf der dem Gleitring 1 abgewandten Seite den Haltering 17 unter Vermeidung einer reibungsbehafteten Relativbewegung anliegend berührt und der zweite Radialsteg 21 radial innenseitig den Innenschenkel 23 und radial außenseitig den Haltering 17 jeweils unter Vermeidung einer reibungsbehafteten Relativbewegung anliegend berührt.

Dadurch, daß der ringförmige Rollbalg 16 im Querschnitt betrachtet im wesentlichen N-förmig ausgebildet ist, baut die gesamte Gleitringdichtung in Verbindung mit dem radial unterhalb des Gegenrings 2 angeordneten Dichtring 7 in axialer Richtung sehr kurz.

Die Abdichtung des abzudichtenden Mediums erfolgt zwischen dem ersten Radialsteg 20 und der der Dichtfläche 3 abgewandten Stirnseite des Gleitrings 1 sowie dem zweiten Radialsteg 21, der den Innenschenkel 23 des Gehäuses 18 unter radialer Vorspannung umfangsseitig dichtend umschließt. Die axiale Vorspannung des ersten Radialschenkels 20 an den Gleitring 1 erfolgt durch die Vorspannung, die durch die Druckfeder 19 auf den Haltering 17 aufgebracht wird, die radiale Vorspannung des zweiten Radialschenkels 22 im wesentlichen durch die Elastizität des Rollbalgwerkstoffs selbst. Unterstützt wird die radiale Vorspannung, mit der der zweite Radialschenkel 21 den Innenschenkel 23 umschließt durch den Haltering 17, der den zweiten Radialsteg 21 unter radialer Vorspannung umschließt. Bei relativen Axialverlagerungen des Gleitrings 1 relativ zum Gehäuse 18, die beispielsweise durch Wärmedehnungen bedingt sind, findet zwischen der Außenumfangsseite des zweiten Radialstegs 21 und dem Bereich des Halterings 17, der vom zweiten Radialsteg 21 unter Vorspannung anliegend berührt wird, eine Abrollbewegung statt. Abrasiver Verschleiß wird dadurch in diesem Bereich vollständig vermieden. Der Rollbalg 16 ist lediglich einer Walkbeanspruchung ausgesetzt, die jedoch keine nachteiligen Auswirkungen auf die Lebensdauer des Rollbalgs 16 hat.

Durch die Ausgestaltung und Anordnung des Halterings 17, des Rollbalgs 16 und des radial unterhalb des Gegenrings 2 angeordneten Dichtrings 7 weist die gesamte Gleitringdichtung außerordentlich geringe Abmessungen in axialer Richtung auf. Im hier gezeigten Ausführungsbeispiel beträgt sowohl der Durchmesser der Welle als auch die axiale Ausdehnung der Gleitringdichtung 12 mm.

## Patentansprüche

1. Gleitringdichtung, umfassend einen Gleitring und einen Gegenring, die einander unter axialer Vorspannung mit Dichtflächen relativ verdrehbar und dichtend berühren, wobei der Gegenring und ein als Widerlager ausgebildeter, im wesentlichen L-förmiger Mitnehmerring relativ unverdrehbar miteinander verbunden sind und der Mitnehmerring auf einer abzudichtenden Welle relativ unverdrehbar festlegbar ist, wobei der Gegenring und der Mitnehmerring durch einen Dichtring gegeneinander abgedichtet sind, wobei der Gegenring den Radialsteg des Mitnehmerrings unmittelbar anliegend berührt und den Axialsteg mit radialem Abstand umschließt und wobei in dem durch den Abstand gebildeten Spalt der Dichtring unter elastischer Vorspannung dichtend angeordnet ist, **dadurch gekennzeichnet**, daß der Gegenring (2) eine Innenumfangsfläche (11) aufweist, die mit der Rotationsachse (12) einen Winkel α einschließt, der 0,5 bis 60° beträgt und daß der radiale Abstand auf der dem Radialsteg (8) zugewandten Seite größer ist als auf der dem Gleitring (1) zugewandten Seite.

2. Gleitringdichtung nach Anspruch 1, dadurch gekennzeichnet, daß der Winkel α 5 bis 45° beträgt.

3. Gleitringdichtung nach einem der Ansprüche 1 bis 2, dadurch gekennzeichnet, daß der Gegenring (2) von einem auf dem Axialsteg (9) angeordneten Druckring (13) berührt ist und daß der Druckring (13) axial in Richtung des Radialstegs (8) vorgespannt ist.

4. Gleitringdichtung nach einem der Ansprüche 1 bis 3, dadurch gekennzeichnet, daß der Gegenring (2), der Mitnehmerring (5), der Dichtring (7) und der Druckring (13) eine vormontierbare Einheit bilden.

5. Gleitringdichtung nach einem der Ansprüche 1 bis 4, dadurch gekennzeichnet, daß der Mitnehmerring (5) und der Druckring (13) aus einem zähharten nicht rostenden Werkstoff bestehen.
